# EUROPEAN PATENT SPECIFICATION

(11) **EP 1 886 884 B1**
(45) Date of publication and mention of the grant of the patent: **28.09.2011**
(21) Application number: 07253001.7
(22) Date of filing: 31.07.2007
(51) Int. Cl.: B60R 25/02

(54) **Vehicle control device and vehicle provided with the same**
Fahrzeugsteuerungsvorrichtung und damit ausgestattetes Fahrzeug
Dispositif de contrôle de véhicule et véhicule équipé avec celui-ci

(30) Priority: 02.08.2006 JP 2006211332
(43) Date of publication of application: 13.02.2008
(73) Proprietor: Yamaha Hatsudoki Kabushiki Kaisha, Iwata-shi, Shizuoka 438-8501 (JP)
(72) Inventor: Yoshizawa, Akihiro, Iwata-shi Shizuoka-ken 438-8501 (JP); Kurita, Hiroaki, Iwata-shi Shizuoka-ken 438-8501 (JP)
(74) Representative: Lamb, Martin John Carstairs

(56) References cited:
- EP-A2- 1 273 492
- US-A- 5 343 077

## Description

### FIELD OF THE INVENTION

The present invention relates to a vehicle control device and a vehicle provided therewith, and more particularly, to a vehicle control device capable of transmitting and receiving a signal from a portable device for certification of use permission of a vehicle, and a vehicle provided therewith.

### BACKGROUND TO THE INVENTION

There is known in the art vehicle burglarproof or anti-theft devices capable of transmitting and receiving a signal from a transmitter for certification or confirmation of use permission of a vehicle. Such an arrangement is disclosed in JP10-176448A. With the vehicle burglarproof device disclosed in JP10-176448A, there is disclosed a method of cancelling a state of precautions (state, in which a vehicle electric source is OFF) without the use of a transmitter, in the case where a battery on a transmitter is discharged or the transmitter itself becomes faulty or out of order. As the method of cancelling a state of precautions, a password having four figures is input by intermittent ringing of a contact of predetermined first and second switches beforehand provided on a vehicle. Specifically, an input start point and a breakpoint of a password are input by inputting the first switch and numeric values of respective figures are input according to frequencies, in which the second switch is input, whereby a password having four figures is input. In the case where the password is compared with a normal code, which is beforehand recorded on the vehicle burglarproof device, and agreement is resulted, the state of precautions is cancelled to afford starting of an engine.

However, the device disclosed in JP 10-176445 A involves a problem that the process of inputting a password is complex since it is necessary to repeat an operation corresponding to one figure, in which the second switch is input a predetermined number of times corresponding to a numeral of the password, four times (corresponding to four figures) after the first switch is input.

The invention has been thought of in order to solve the problem described above and has its object to provide a vehicle control device capable of simplifying an input work of a password, which puts a vehicle in a usable state, on an emergency occasion, in which a portable equipment cannot be used.

Another example of a remote control lock device, according to the preamble of claim 1, is described by EP1273492A. This device allows the use of a mobile phone as an emergency communication means for operating a lock actuator, when the hand-held remote transmitter is not available. The mobile phone has the conventional function of a normal mobile phone and includes an infrared transceiver port capable of sending and receiving an infrared signal, and a transmission control means for allowing the infrared signal corresponding to an ID code input using the operating panel of the mobile phone to be transmitted from the infrared transceiver port. Therefore, in the case where a remote control transmitter is lost or not in the user's hands due to some other reason, specific input operation may be made using the mobile phone and when the infrared signal from the mobile phone is received by an infrared receiving portion of the remote control receiver, the control unit of the remote control lock operation device operates and controls the lock actuator and unlocks the same.

### SUMMARY OF THE INVENTION

According to a first aspect of the present invention there is provided a vehicle control device adapted to permit use of an associated vehicle by inputting a password, the vehicle control device comprising:
a display unit adapted to flash when a password is required to be inputted, wherein the number of flashes of the display unit is adapted to correspond to a password numeral; and
a password input unit adapted to control the number of flashes of the display unit.

In use, a user may manipulate the password input unit to cause the display unit to flash the required number of times to correspond to a password numeral. The present invention therefore allows a password to be inputted into the vehicle control device in accordance with the number of flashes which are permitted by the password input unit.

The present invention is particularly advantageous for use in combination with vehicles which comprise a communication system wherein a portable device, such as an electronic key fob, transits a password to the vehicle to allow the vehicle to be used. As such, the invention permits the vehicle to be used when the password cannot be transmitted by the portable device, for example when the portable device is faulty or the like.

The password input unit may include a first switch adapted to be configured between ON and OFF configurations to control the number of flashes of the display unit to corresponding to a desired password numeral.

The first switch may be adapted to be operated by applying an operating force thereto, and to be maintained in a respective ON or OFF configuration when the operating force is removed or is not applied.

The vehicle control device may further comprise a flash control unit has adapted to control the display unit to flash at a predetermined frequency. For example, the predetermined frequency may be 1 Hz.

The display unit may be provided in a system display unit for use in displaying a state of a communication system between an associated vehicle and a portable device.

The vehicle control device may further comprise:
a storage unit adapted to store the password; and
a collation unit adapted to collate an inputted password with the password stored in the storage unit.

When the collation unit collates an inputted password with a password stored in the storage unit, the display unit may display results of the collation. The display unit may display, in different lighting patterns, agreement and disagreement as results of the collation.

The password input unit may be provided in the vicinity of a handle grip portion of an associated vehicle.

The password input unit may include a hazard switch adapted to flash a hazard or indicator lamp of an associated vehicle. The display unit may be adapted to flash during inputting a password when the hazard switch is turned ON, without flashing the hazard lamp.

The vehicle control device may further comprise a second switch adapted to be operated to configure the vehicle control device into a state prepared to receive the password.

The second switch may be adapted to be operated a plurality of times to configure the vehicle control device into the prepared state.

The second switch may be adapted to be operated within a predetermined period of time to configure the vehicle control device into the prepared state.

The second switch may comprise a detection switch adapted to detect opened and closed states of an opening and closing portion provided on the vehicle. The opening and closing portion may comprise a trunk portion. The trunk portion may include a lock portion for locking of the trunk portion.

The vehicle control device may further comprise an input operation mode starting switch mounted to the vehicle and adapted to be activated prior to operating the second switch.

The vehicle control device, in which certification of use permission of a vehicle may be made by a communication system making use of a portable equipment, the vehicle control device comprising a display unit, which flashes on an emergency occasion when a password for certification of use permission of the vehicle is input without the use of the portable equipment, and a password input unit, with which the password is input according to frequencies, in which the display unit flashes.

With the vehicle control device, there is provided a password input unit, with which a password is input according to frequencies, in which the display unit flashes, when a password for certification of use permission of a vehicle is to be input on an emergency occasion without the use of the portable equipment, whereby it is possible to decrease times of input as compared with the case where a switch is input times corresponding to a numeral of the password, because input for one figure is completed only by counting those frequencies, in which the display unit flashes, and giving instructions of completion of input when flash is made predetermined frequencies corresponding to the password. Thereby, it is possible to simplify an input work of a password, which puts a vehicle in a usable state, on an emergency occasion, in which the portable equipment cannot be used.

In the vehicle control device, preferably, the password input unit includes a first switch, and in the case where the password is to be input, ON and OFF operations of the first switch determine frequencies, in which the display unit flashes corresponding to the password. With such construction, frequencies, in which the display unit flashes corresponding to a password, can be determined readily by a predetermined switch.

In the vehicle control device, in which ON and OFF operations of the predetermined switch determine frequencies, in which the display unit flashes corresponding to the password, preferably, even when an operating force is relaxed in respective ON and OFF states, the first switch maintains respective states. With such construction, since a hand can be separated from the first switch during flash, it is possible to further simplify an input work of a password.

In the vehicle control device, preferably, there is further provided a flash control unit, which has the display unit flashing at predetermined intervals. With such construction, since the flash control unit has the display unit flashing at predetermined intervals, a user can readily count frequencies, in which the display unit flashes.

In the vehicle control device, preferably, a system display unit, which displays a state of the communication system, is used as the display unit. With such construction, since it is unnecessary to separately provide a display unit, which is used only on an emergency occasion, in which the portable equipment cannot be used, the construction can be inhibited from becoming complex.

In the vehicle control device, preferably, there are further provided a storage unit, in which the password is stored, and a collation unit, which collates the input password with the password stored in the storage unit. With such construction, the collation unit can collate the input password with a password stored in the storage unit.

In the vehicle control device, in which ON and OFF operations of the predetermined switch determine frequencies, in which the display unit flashes corresponding to the password, preferably, there is further provided a handle grip portion provided on the vehicle to steer the vehicle, and the password input unit is provided in the vicinity of the handle grip portion. With such construction, since a user can perform a password input work while grasping the handle grip portion, it is possible to perform a password input work in a state, in which the vehicle is stable.

In the vehicle control device, in which the password input unit is provided in the vicinity of the handle grip portion, preferably, a hazard lamp is further provided on the vehicle and the password input unit includes a hazard switch to flash the hazard lamp. With such construction, since it is unnecessary to separately provide a password input unit, which is used only on an emergency occasion, in which the portable equipment cannot be used, the construction can be inhibited from becoming complex.

In the vehicle control device, in which the password input unit includes a hazard switch to flash the hazard lamp, preferably, in inputting the password, the display unit is controlled to flash when the hazard switch is made ON, without flashing the hazard lamp. With such construction, it is possible to prevent occurrence of trouble that the password is revealed to a third person due to flash of the hazard lamp when the password is input.

In the vehicle control device, preferably, a second switch is provided on the vehicle, and the second switch is operated over plural times within a predetermined period of time whereby a state, in which the password can be input, is brought about. With such construction, since a state, in which the password can be input, is not readily brought about, it is possible to inhibit a state, in which the password can be put, from being brought about by mistake.

In the vehicle control device, in which the second switch is provided, preferably, the second switch includes a detection switch, which detects opened and closed states of a predetermined opening and closing portion provided on the vehicle, and the opening and closing portion is opened and closed over plural times within the predetermined period of time whereby a state, in which the password can be input, is brought about. With such construction, predetermined opening and closing readily bring about a state, in which the password can be input.

In the vehicle control device, in which the opening and closing portion is opened and closed whereby a state, in which the password can be input, is brought about, preferably, the opening and closing portion includes a trunk portion, and the trunk portion is opened and closed over plural times within the predetermined period of time whereby a state, in which the password can be input, is brought about. With such construction, the trunk portion is opened and closed to readily enable bringing about a state, in which the password can be input.

In the vehicle control device, in which the trunk portion is opened and closed whereby a state, in which the password can be input, is brought about, preferably, the trunk portion includes a lock portion for locking of the trunk portion. With such construction, since only a person substantially carrying a key for locking can bring about a state, in which a password can be input, it is possible to further inhibit a vehicle from being stolen.

In the vehicle control device, in which the predetermined opening and closing portion is opened and closed whereby a state, in which the password can be input, is brought about, preferably, there is further provided an input operation mode starting switch mounted to the vehicle and pushed on an emergency occasion prior to an operation of the second switch to begin a password input operation mode on the emergency occasion. With such construction, since a standby state for the start of a password input operation mode can be brought about only when the input operation mode starting switch is pushed, it is possible to inhibit consumption of electric power when a vehicle is not used. Thereby, it is possible to suppress consumption of a battery on the vehicle.

In the vehicle control device, in which the collation unit is further provided to collate the input password with the password stored in the storage unit, preferably, when the collation unit collates the input password with a password stored in the storage unit, the display unit displays results of the collation. With such construction, a user can readily confirm results of collation, in which a password input by the user is collated with a password stored in the storage unit.

In the vehicle control device, in which the display unit displays results of the collation, preferably, the display unit displays, in different lighting patterns, agreement and disagreement as results of the collation. With such construction, since it is unnecessary to provide a display unit, which displays results of collation, in case of agreement and in case of disagreement, respectively, the construction can be inhibited from becoming complex.

In a third aspect of the invention, a vehicle comprises the vehicle control device according to the first or second aspects. With such construction, it is possible to readily simplify an input work of a password, which puts a vehicle in a usable state, on an emergency occasion, in which the portable equipment cannot be used.

### BRIEF DESCRIPTION OF THE DRAWINGS

These and other aspects of the present invention will now be described, by way of example only, with reference to the accompanying drawings, in which:
Fig. 1 is a side view showing a whole construction of a motorcycle according to an embodiment of the invention;
Fig. 2 is a view illustrating a construction of a vehicle control device on the motorcycle, according to the embodiment, shown in Fig. 1;
Fig. 3 is a perspective view showing a detailed construction in the vicinity of a right handle grip portion on the motorcycle, according to the embodiment, shown in Fig. 1;
Fig. 4 is a front view showing a mechanical key associated with the motorcycle, according to the embodiment, shown in Fig. 1;
Fig. 5 is a front view showing a smart key and a mechanical key of the vehicle control device, according to the embodiment, shown in Fig. 1;
Fig. 6 is a view showing a smart key of the vehicle control device, according to the embodiment, shown in Fig. 1;
Fig. 7 is a view showing, in detail, a construction of the motorcycle, according to the embodiment, shown in Fig. 1;
Fig. 8 is a view showing a meter portion of the motorcycle, according to the embodiment, shown in Fig. 1; and
Fig. 9 is a flowchart illustrating a process flow of the vehicle control device, according to the embodiment, shown in Fig. 1.

### DETAILED DESCRIPTION OF THE DRAWINGS

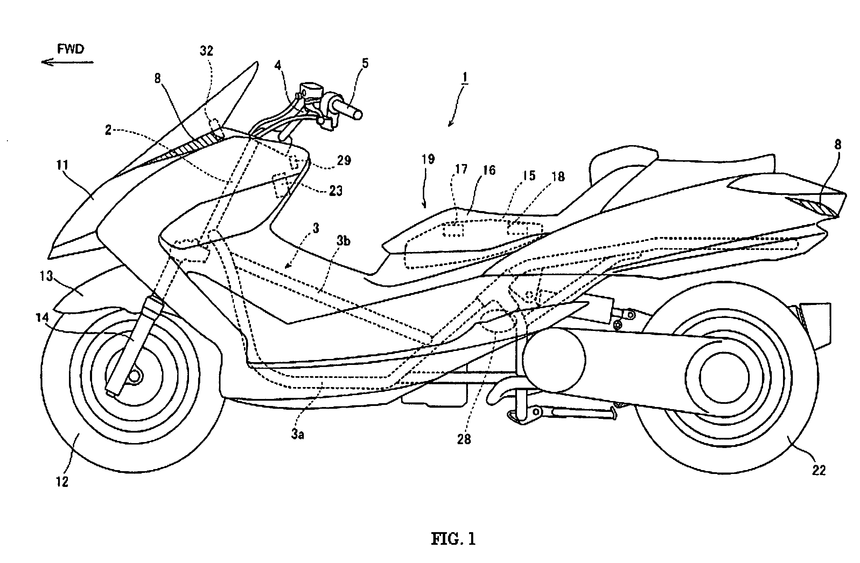

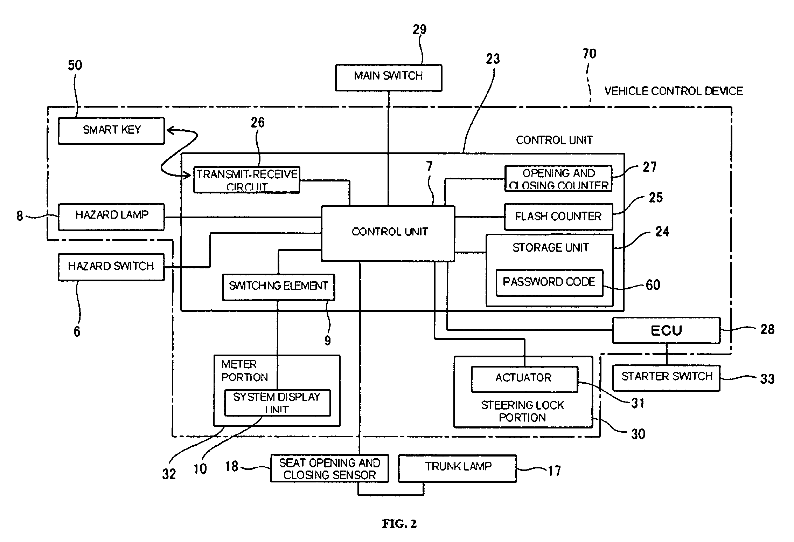

Fig. 1 is a side view showing a whole construction of a motorcycle according to an embodiment of the invention. Figs. 2 to 8 are views illustrating a construction of a vehicle control device of the motorcycle, according to the embodiment, shown in Fig. 1. The motorcycle is described herein as an example of a vehicle according to the invention. In the drawings, an arrow marked FWD indicates the front of the motorcycle in a traveling direction. The motorcycle 1 and vehicle control device 70 according to the embodiment of the invention will be described with reference to Figs. 1 to 8.

The motorcycle 1 includes a main frame 3 arranged rearwardly of a head pipe 2 as shown in Fig. 1. The main frame 3 includes a frame body portion 3a, which forms a body portion of the main frame 3, and a support portion 3b, which supports the frame body portion 3a in two locations on an upper portion thereof. The head pipe 2 and the main frame 3 constitute a body frame.

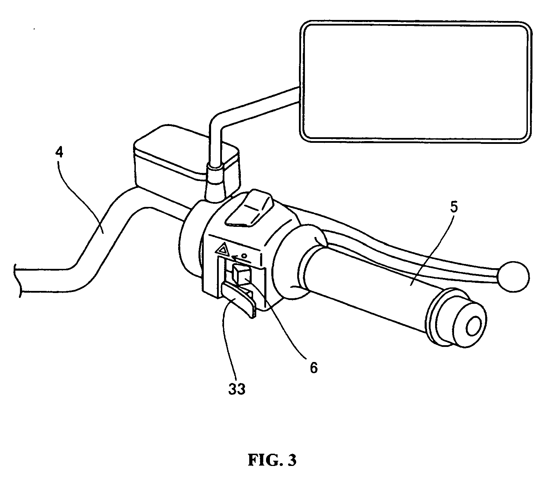

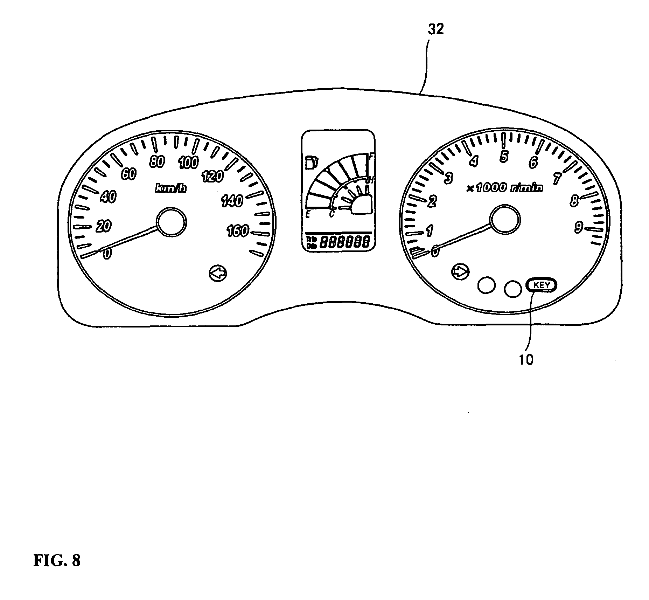

A handle 4 is arranged on an upper portion of the head pipe 2. Handle grip portions 5 are provided on both ends of the handle 4 to permit a user to steer the motorcycle 1. As shown in Fig. 3, a hazard switch 6 is provided on the right handle grip portion 5. The hazard switch 6 is exemplary of a "password input portion" and a "predetermined switch" of the invention. As shown in Fig. 2, the hazard switch 6 is connected to a control unit 7, described later, and a hazard lamp 8 (also shown in Fig. 1) is connected to the control unit 7. Also, a system display unit 10 (see Figs. 2 and 8), described later, is connected to the control unit 7 through a switching element 9. The switching element 9 enables the system display unit 10 to flash in a cycle of 1 second. The system display unit 10 is exemplary of a "display unit" of the invention, the switching element 9 is exemplary of a "flash control unit" of the invention, and the control unit 7 is exemplary of a "collating unit" of the invention. Also, the system display unit 10 is provided to inform a user of a status of a communication system to a smart key 50, described later, on normal occasions and to function as a display unit for input of a password on emergency occasions. The hazard lamp 8 is constructed not to flash also in the case where the hazard switch 6 is turned ON when a processing is performed on an emergency occasion, in which the smart key 50 cannot be used. As shown in Fig. 1, a front cowl 11 is provided forwardly of the head pipe 2 to cover the front of the head pipe 2. A front wheel 12 and a front fender 13 arranged above the front wheel 12 are arranged below the front cowl 11. The front wheel 12 is rotatably mounted on a pair of front forks 14.

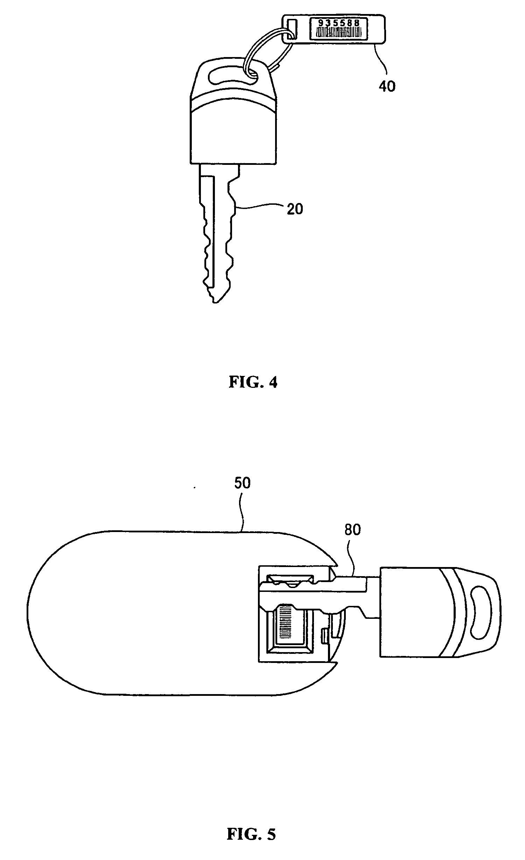

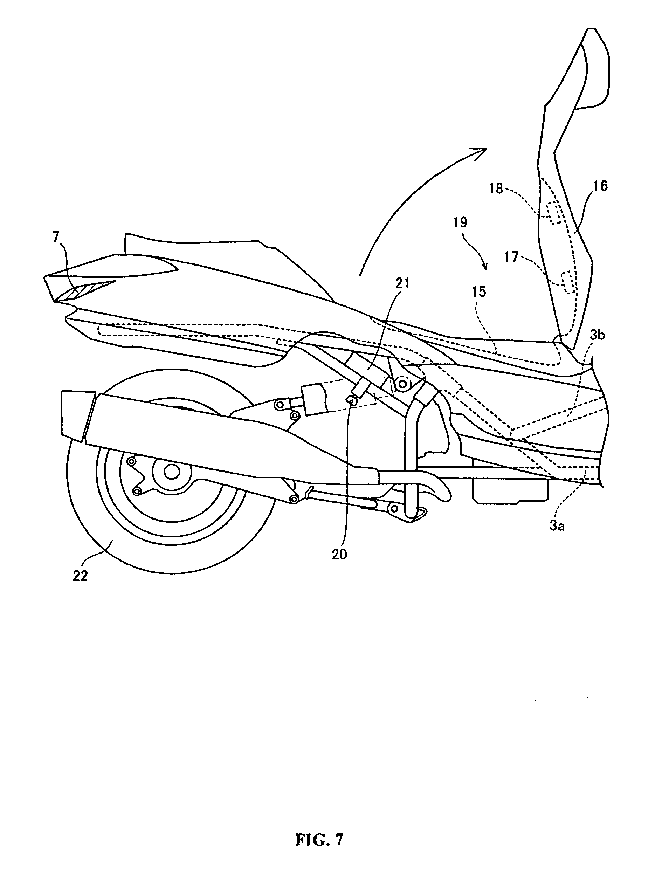

A trunk 15 (see Fig. 1) for storage of a package, etc. is provided on a rear, upper portion of the main frame 3. As shown in Fig. 7, a seat 16 is arranged above the trunk 15 to enable the trunk 15 to open and close. Also, a seat opening and closing sensor 18 (see Fig. 2) is provided to light up a trunk lamp 17 provided inside the trunk 15 when the seat 16 is opened. A trunk part 19 is constituted by the trunk 15, the seat 16, the trunk lamp 17, and the seat opening and closing sensor 18 (see Fig. 2). The trunk part 19 is exemplary of a "predetermined opening and closing part" and an "opening and closing part" of the invention. A mechanical lock part 21 (see Fig. 7) is provided on a rear, lower portion of the trunk part 19 to permit a mechanical key 20 (see Fig. 4) to lock and unlock the trunk part 19. Thereby, only a person having the mechanical key 20 should be permitted to open and close the seat 16 on the trunk part 19. The mechanical lock part 21 is exemplary of a "lock part" of the invention. A rear wheel 22 is rotatably arranged below a rear end of the main frame 3.

A control unit 23 is provided rearwardly of the head pipe 2, as shown in Fig. 1. As shown in Fig. 2, provided on the control unit 23 are the control unit 7, the switching element 9, a storage unit 24, a flash counter 25, a transmit-receive circuit 26, and an opening and closing counter 27, each of which is connected to the control unit 7. A password code 60 is stored in the storage unit 24, wherein the password code 60 corresponds to a password having six predetermined figures (for example, 935588) and used on an emergency occasion, in which the smart key 50, described later, cannot be used, and an identification code provided in the smart key 50, which is used on normal occasions, in which the smart key 50 can be used. The smart key 50 has a battery (not shown) built-in and records an identification code, which determines whether the smart key 50 corresponds to the motorcycle 1. The smart key 50 is exemplary of a "portable equipment" of the invention.

The control unit 7 is connected to an ECU (Engine Control Unit) 28 arranged below the seat 16 (see Fig. 1), a main switch 29 (see Fig. 1) arranged below a center of the handle 4 (see Fig. 1) in a width direction, an actuator 31 (see Fig. 2) provided on a steering lock portion 30, which functions to lock the handle 4 (see Fig. 1) when the motorcycle 1 is not used, the system display unit 10 provided on a meter portion 32 (see Figs. 1 and 8) arranged on a side of the handle 4 above the front cowl 10, the hazard lamp 8, the trunk lamp 17, and the seat opening and closing sensor 18. On a normal occasion, in which the smart key 50 can be used, the main switch 29 is used in order to put a system, which transmits an identification request signal to the smart key 50, described later, in an ON or OFF state. On an emergency occasion, in which the smart key 50 cannot be used, the main switch 29 is pushed before inputting of a password to function to begin an input operation mode for inputting of a password and is pushed after inputting of a password to function to release the steering lock portion 30 to put the motorcycle 1 in a usable state. The main switch 29 is exemplary of an "input operation mode starting switch" of the invention. The control unit 7, the ECU 28, and the actuator 31 are constructed to use SCI (Serial Communication Interface, not shown) to make serial communication. The ECU 28 is connected to a starter switch 33 (see Fig. 3) mounted in the vicinity of the right handle grip portion 5 (see Fig. 3). A vehicle control device 70 is constituted by the hazard lamp 8, the control unit 23, the ECU 28, the steering lock portion 30, the meter portion 32, and the smart key 50.

The control unit 7 is constructed to make communication with the transmit-receive circuit 26 and the smart key 50 for certification of use permission of the motorcycle 1 in the case where the main switch 29 is turned ON on a normal occasion, in which the smart key 50 can be used, and functions to put the motorcycle 1 in a usable state in the case it is determined that the smart key 50 is a smart key corresponding to the motorcycle 1. Specifically, the transmit-receive circuit 26 is constructed so that the control unit 7 transmits an identification code request signal to the smart key 50 when a user pushes the main switch 29 and the starter switch 33. Also, the transmit-receive circuit 26 functions to transmit an identification code signal received from the smart key 50 to the control unit 7.

The control unit 7 is also constructed to determine whether, in the case where a password having predetermined six figures (for example, 935588) is input on an emergency occasion, this agrees with the password code 60 stored in the storage unit 24.

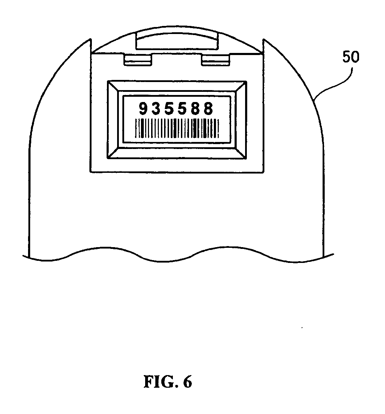

As shown in Fig. 5, a mechanical key 80 being of the same type as that of the mechanical key 20 of the mechanical lock part 21 is mounted detachably in the smart key 50. Thereby, a construction is made so that on an emergency occasion, in which the smart key 50 cannot be used, it is possible to use the mechanical key 80 and to use the motorcycle 1 in a procedure described later. The smart key 50 is constructed so that the mechanical key 80 is mounted detachably in the smart key 50 whereby a user of the motorcycle 1 is required not to usually carry the mechanical key 20 together with the smart key 50. As shown in Fig. 6, on a normal occasion, a password having predetermined six figures (for example, 935588) corresponding to the motorcycle 1 is labeled on that portion of the smart key 50, which is covered by the mechanical key 80 to be hidden due to mounting of the mechanical key 80 to the smart key 50. Thereby, the password, which is not usually used by a user of the motorcycle 1, is not read by a third person. As shown in Fig. 4, a tag 40, on which the password (935588) is labeled, is mounted also to the mechanical key 20.

The system display unit 10 is connected to the flash counter 25 through the control unit 7, so that it is possible to count those frequencies, in which the system display unit 10 flashes. Since the seat opening and closing sensor 18 is connected to the opening and closing counter 27 through the control unit 7, it is possible to count those frequencies, in which the seat 16 is opened and closed.

A method of inputting a password according to the embodiment will now be described with reference to Figs. 2 to 8.

First, as shown in Fig. 7, on an emergency occasion, in which the smart key 50 (see Fig. 2 and Fig. 5) cannot be used, a user turns the main switch 29 (see Fig. 2) ON, and thereafter uses the mechanical key 20 (see Fig. 4) or the mechanical key 80 (see Fig. 5) within 15 seconds to release the mechanical lock part 21 and to open and close the seat 16 three times.

A user begins the work of inputting the password (935588) (see Fig. 6) according to the embodiment within 10 seconds after opening and closing the seat 16 three times. Specifically, a first figure "9" of the password is input. In this case, after opening and closing the seat 16 three times, a user turns the hazard switch 6 (see Fig. 3) ON within 10 seconds to begin flashing the system display unit 10 (see Fig. 8). When the system display unit 10 has flashed nine times, a user turns the hazard switch 6 OFF. Thereby, the first figure is determined as "9". Accordingly, a user is not required to push the hazard switch 6 nine times to correspond to the password numeral "9", but may put the hazard switch 6 in an ON state and count flashing of the system display unit 10 and subsequently turn the hazard switch 6 OFF when a predetermined number of flashes are counted. Thereafter, a user repeats operations of inputting respective figures such as "3" in the second figure and "5" in the third figure, and so on to input the six figures.

When the exact six figure password (935588) (see Fig. 6) is input, the system display unit 10 (see Fig. 8) lights up to confirm to a user that the correct password has been input. The user may then turn the main switch 29 (see Fig. 2) ON, while the system display unit 10 is lit up (10 seconds), to release the steering lock portion 30 (and put the motorcycle 1 in a usable state.

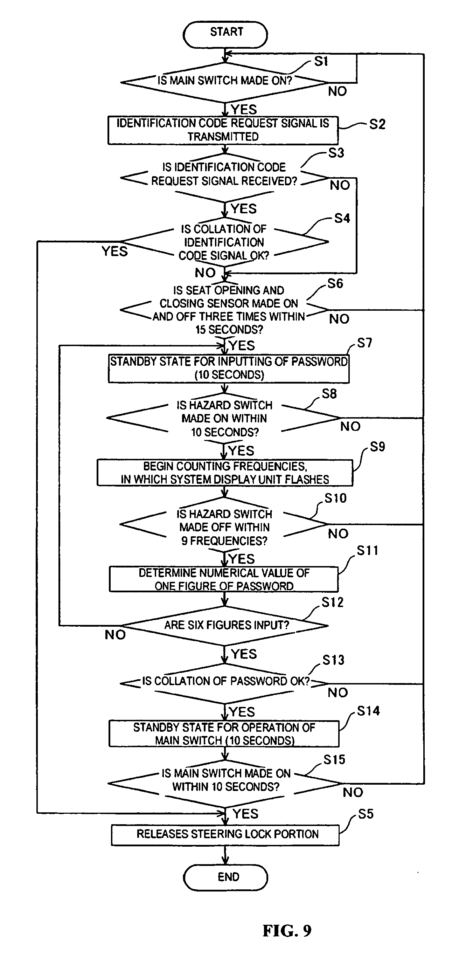

Fig. 9 is a flowchart illustrating a process flow on a side of the vehicle control device, according to the embodiment described herein. Referring to Figs. 2 and 9, a detailed explanation is given below of the process flow when the motorcycle 1 is put in a usable state.

In STEP S1 shown in Fig. 9, it is determined whether the main switch 29 (see Fig. 2) has been turned ON. In the case where it is determined in STEP S1 that the main switch 29 is not turned ON, the judgment in STEP S1 is repeated. In the case where it is determined in STEP S1 that the main switch 29 is turned ON, the matter of the main switch 29 being made ON is transmitted to the control unit 7 (see Fig. 2) and the procedure proceeds to STEP S2. In STEP S2, an identification code request signal is transmitted to the smart key 50 (see Fig. 2) from the transmit-receive circuit 26 (see Fig. 2). At this time, in the case where the smart key 50 is positioned in a communication enabled range (about 1 m) in the vicinity of the control unit 23, the identification code request signal from the transmit-receive circuit 26 is received by the smart key 50 and an identification code signal is transmitted to the transmit-receive circuit 26 from the smart key 50.

Thereafter, it is determined in STEP S3 whether the identification code signal has been received by the transmit-receive circuit 26. In the case where it is determined in STEP S3 that the identification code signal has not been received, the procedure proceeds to STEP S6. In the case where it is determined in STEP S3 that the identification code signal has been received, the procedure proceeds to STEP S4.

In STEP S4, the received identification code signal is transmitted to the control unit 7 and the control unit 7 determines whether an identification code corresponding to the identification code signal received from the smart key 50 agrees with an identification code, which is beforehand recorded in the storage unit 24 (see Fig. 2) . If it is determined in STEP S4 that the identification code signal received from the smart key 50 agrees with the identification code recorded in the storage unit 24, the procedure proceeds to STEP S5. In STEP S5, the actuator 31 (see Fig. 2) releases the steering lock portion 30 (see Fig. 2) to put the motorcycle 1 in a usable state whereby the processing is terminated. In the case where it is determined in STEP S4 that the identification code signal received from the smart key 50 does not agree with the identification code recorded in the storage unit 24, the procedure proceeds to STEP S6.

In STEP S6, the seat 16 (see Fig. 7) is opened and closed three times or more within 15 seconds whereby whether the seat opening and closing sensor 18 (see Fig. 2) is turned ON and OFF three times or more is counted by the opening and closing counter 27 and determined by the control unit 7. In the case where it is determined in STEP S6 that the seat opening and closing sensor 18 has not been turned ON and OFF three times within 15 seconds, the procedure returns to STEP S1. In the case where it is determined in STEP S6 that the seat opening and closing sensor 18 has been turned ON and OFF three times within 15 seconds, the procedure proceeds to STEP S7. In STEP S7, a standby state for inputting of a password continues for 10 seconds and the procedure proceeds to STEP S8.

It is determined in STEP S8 whether, in order to input the first figure of the password, the hazard switch 6 (see Fig. 3) has been turned ON within 10 seconds after the seat opening and closing sensor 18 is turned ON and OFF three times. In the case where it is determined in STEP S8 that the hazard switch 6 has not been turned ON within 10 seconds, the procedure returns to STEP S1. In the case where it is determined in STEP S8 that the hazard switch 6 has been turned ON within 10 seconds, the procedure proceeds to STEP S9. In STEP S9, the flash counter 25 begins counting the system display unit 10 flashes, and the procedure proceeds to STEP S10. At this time, the hazard switch 6 is turned ON whereby the system display unit 10 (see Fig. 2) is caused, through the switching element 9 (see Fig. 2), to begin flashing at a cycle of 1 per second, so that a user can visually confirm the frequencies, in which the system display unit 10 flashes. In this case, because of a processing performed on an emergency occasion, in which the smart key 50 cannot be used, the hazard lamp 8 (see Fig. 1) is controlled not to flash.

Thereafter, it is determined in STEP S10 whether the hazard switch 6 has been turned OFF within 9 frequencies, in which the system display unit 10 flashes. In the case where it is determined in STEP S10 that the hazard switch 6 has not been turned OFF within 9 frequencies or flashes, the main switch 29 is turned OFF, and the procedure returns to STEP S1. In the case where it is determined in STEP S10 that the hazard switch 6 has been turned OFF within 9 frequencies, the procedure proceeds to STEP S11. In STEP S11, the number of system display unit 10 flashes are determined as a numerical value of one figure (first figure) of the password. Thereafter, the procedure proceeds to STEP S12.

In STEP S12, the control unit 7 determines whether the six figures of the password have been input. In the case where it is determined in STEP S12 that the six figures have not been input, the procedure returns to STEP S7 to come to a standby state prepared to receive the inputting of a subsequent figure . In the case where it is determined in STEP S12 that all six figures have been input, the procedure proceeds to STEP S13.

In STEP S13, the control unit 7 determines whether the input password corresponds to the password code 60 stored in the storage unit 24. In the case where it is determined in STEP S13 that the input password does not correspond to the stored password in the storage unit 24, the procedure returns to STEP S1. In the case where it is determined in STEP S13 that the input password corresponds to the stored password code 60, the procedure proceeds to STEP S14. In STEP S14, a 10 seconds standby state is provided for a user to perform an ON operation of the main switch 29. During the standby state, the system display unit 10 lights up, and the procedure proceeds to STEP S15. Since the system display unit 10 is lit up at this time, a user can confirm that the password has been correctly input.

In STEP S15, the control unit 7 determines whether the main switch 29 has been turned ON during the 10 seconds standby state. In the case where it is determined in STEP S15 that the main switch 29 has not been turned ON during the standby state, the procedure returns to STEP S1. In the case where it is determined in STEP S15 that the main switch 29 has been turned ON during the standby state, the procedure proceeds to STEP S5. In STEP S5, the actuator 31 releases the steering lock portion 30 to put the motorcycle 1 in a usable state and the process is terminated.

According to the embodiment, there is provided the hazard switch 6, with which a password may be input according to the required number of flashes of the system display unit 10, when a password is to be input for certification of use permission of the motorcycle 1 on an emergency occasion without the use of the smart key 50. Accordingly, it is possible to decrease the number of required switching operations as compared with the case where a switch must be operated the necessary number of times to correspond to a password, because input for one figure is completed only by counting the number of flashes of the system display unit 10, and turning the hazard switch 6 OFF when the required number of flashes is made. Thereby, on an emergency occasion, in which the smart key 50 cannot be used, it is possible to simplify the work of inputting a password, by which the motorcycle 1 is put in a usable state.

Since the embodiment is constructed so that a state, in which a password can be input, is brought about on an emergency occasion by opening and closing the seat opening and closing sensor 18 of the trunk part 19 provided on the motorcycle 1 three times or more within 15 seconds after the main switch 29 is turned ON, a state, in which a password can be input, is not readily brought about. Thereby, it is possible to inhibit a state, in which a password can be input, from being brought about by mistake.

Since the trunk part 19 can be locked with the mechanical key 20 and the mechanical lock part 21, only a person carrying the mechanical key 20 can bring about a state, in which a password can be input, so that it is possible to further inhibit the motorcycle 1 from being stolen.

A password input operation mode on an emergency occasion is started after the main switch 29 is turned ON, whereby a standby state for the start of a password input operation mode can be brought about only when the main switch 29 is pushed, so that it is possible to inhibit consumption of electric power when the motorcycle 1 is not used. Thereby, it is possible to suppress consumption of a battery on the motorcycle 1.

It should be understood that the embodiment disclosed herein is exemplary in all respects and not limitative. The scope of the invention is indicated not by the descriptions of the embodiment but by the claims and embraces all changes, which come within the meaning and range of equivalence of the claims.

For example, while the embodiment illustrates a motorcycle as an example of a vehicle provided with a vehicle control device, in which a portable equipment (smart key) is used, the invention is not limited thereto but applicable to other vehicles such as bicycle, three-wheeler, ATV (all-terrain vehicle), etc. provided that the vehicles comprise the vehicle control device provided with a portable equipment (smart key).

Also, while the embodiment illustrates an example, in which a vehicle can be used by collating a password code corresponding to a password having six figures, the invention is not limited thereto but applicable to a password having any number of figures.

Additionally, while the embodiment illustrates an example, in which a system display unit is used in a location, in which flash is made when a password is counted, the invention is not limited thereto but a hazard lamp may be used.

Further, while the embodiment illustrates an example, in which a password can be input by counting the number of flashes of a system display unit, the invention is not limited thereto but a password may be input by counting the number of times an audible sound issues from an alarm portion provided on a vehicle in time to flash of a system display unit.

Also, while the embodiment illustrates an example, in which a hazard switch is used as an input portion of a password, the invention is not limited thereto but a main switch or a starter switch may be used, or alternatively a dedicated switch may be used.

### Description of Reference Numerals and Signs

1: motorcycle (vehicle)
5: handle grip portion
6: hazard switch (password input portion, switch)
7: control unit (collation unit)
8: hazard lamp
9: switching element (flash control unit)
10: system display unit (display unit)
18: trunk (opening and closing portion)
21: mechanical lock part (lock part)
24: storage unit
29: main switch (input operation mode starting switch)
50: smart key (portable equipment)
70: vehicle control device

## Claims

1. A vehicle control device (70) adapted to permit use of an associated vehicle (1) by inputting a password, the vehicle control device (70) is **characterised in that** it comprises:
a display unit (10) adapted to flash when a password is required to be inputted, wherein the number of flashes of the display unit (10) is adapted to correspond to a password numeral; and
a password input unit adapted to control the number of flashes of the display unit (10).

2. The vehicle control device (70) according to claim 1, wherein the password input unit includes a first switch (6) adapted to be configured between ON and OFF configurations to control the number of flashes of the display unit (10) to corresponding to a desired password numeral.

3. The vehicle control device (70) according to claim 2, wherein the first switch (6) is adapted to be operated by applying an operating force thereto, and to be maintained in a respective ON or OFF configuration when the operating force is removed.

4. The vehicle control device (70) according to claim 1, 2 or 3, further comprising a flash control unit (9) adapted to control the display unit (10) to flash at a predetermined frequency.

5. The vehicle control device (70) according to any preceding claim, wherein the display unit (10) is provided in a system display unit for use in displaying a state of a communication system between an associated vehicle (1) and a portable device (50).

6. The vehicle control device (70) according to any preceding claim, further comprising:
a storage unit (24) adapted to store the password;
and
a collation unit adapted to collate an inputted password with the password stored in the storage unit (24).

7. The vehicle control device (70) according to any preceding claim, wherein the password input unit is provided in the vicinity of a handle grip portion (5) of an associated vehicle (1).

8. The vehicle control device (70) according to any preceding claim, wherein the password input unit includes a hazard switch (6) adapted to flash a hazard lamp (8) of an associated vehicle (1).

9. The vehicle control device (70) according to claim 8, wherein the display unit (10) is adapted to flash during inputting a password when the hazard switch (6) is turned ON, without flashing the hazard lamp (8).

10. The vehicle control device (70) according to any preceding claim, further comprising a second switch (18) adapted to be operated to configure the vehicle control device (70) into a state prepared to receive the password.

11. The vehicle control device (70) according to claim 10, wherein the second switch (18) is adapted to be operated a plurality of times to configure the vehicle control device (70) into the prepared state.

12. The vehicle control device (70) according to claim 10 or 11, wherein the second switch (18) is adapted to be operated within a predetermined period of time to configure the vehicle control device (70) into the prepared state.

13. The vehicle control device (70) according to claim 10, 11 or 12, wherein the second switch (18) comprises a detection switch adapted to detect opened and closed states of an opening and closing portion provided on the vehicle (1).

14. The vehicle control device (70) according to claim 13, wherein the opening and closing portion comprises a trunk portion.

15. The vehicle control device (70) according to claim 14, wherein the trunk portion includes a lock portion (21) for locking of the trunk portion.

16. The vehicle control device (70) according to any one of claims 10 to 15, further comprising an input operation mode starting switch (29) mounted to the vehicle (1) and adapted to be activated prior to operating the second switch (18).

17. The vehicle control device (70) according to any one of claims 6 to 16, wherein when the collation unit collates an inputted password with a password stored in the storage unit (24), the display unit (10) displays results of the collation.

18. The vehicle control device (70) according to claim 17, wherein the display unit (10) displays, in different lighting patterns, agreement and disagreement as results of the collation.

19. The vehicle control device (70) according to claim 1, in which certification of use permission of a vehicle is made by a communication system making use of a portable equipment (50), wherein:
the display unit (10) is adapted to flash on an emergency occasion when a password for certification of use permission of the vehicle (1) is input without the use of the portable equipment (50), and
the password input unit, is adapted to receive input of the password according to frequencies in which the display unit (10) flashes.

20. A vehicle (1) comprising the vehicle control device (70) according to any one of claims 1 to 19.

## Patentansprüche

1. Fahrzeugsteuerungsvorrichtung (70), die angepasst ist, um Verwendung eines assoziierten Fahrzeugs (1) durch Eingabe eines Kennworts zu gestatten, wobei die Fahrzeugsteuerungsvorrichtung (70) **dadurch gekennzeichnet ist, dass** sie Folgendes umfasst:
eine Anzeigeeinheit (10), die angepasst ist, um zu blinken, wenn die Eingabe eines Kennworts erforderlich ist, wobei die Blinkanzahl der Anzeigeeinheit (10) angepasst ist, um mit einer Kennwortziffer zu korrespondieren; und
eine Kennworteingabeeinheit, die angepasst ist, um die Blinkanzahl der Anzeigeeinheit (10) zu steuern.

2. Fahrzeugsteuerungsvorrichtung (70) nach Anspruch 1, wobei die Kennworteingabeeinheit einen ersten Schalter (6) enthält, der angepasst ist, um zwischen den Konfigurationen EIN und AUS konfiguriert zu werden, um zu steuern, dass die Blinkanzahl der Anzeigeeinheit (10) mit einer gewünschten Kennwortziffer korrespondiert.

3. Fahrzeugsteuerungsvorrichtung (70) nach Anspruch 2, wobei der erste Schalter (6) angepasst ist, um durch Anwenden einer Betätigungskraft darauf betätigt zu werden und um in einer jeweiligen EIN- oder AUS-Konfiguration gehalten zu werden, wenn die Betätigungskraft entfernt wird.

4. Fahrzeugsteuerungsvorrichtung (70) nach Anspruch 1, 2 oder 3, ferner eine Blinksteuerungseinheit (9) umfassend, die angepasst ist, um zu steuern, dass die Anzeigeeinheit (10) mit einer im Voraus bestimmten Frequenz blinkt.

5. Fahrzeugsteuerungsvorrichtung (70) nach einem der vorstehenden Ansprüche, wobei die Anzeigeeinheit (10) in einer Systemanzeigeeinheit zur Verwendung bei der Anzeige eines Zustands eines Kommunikationssystems zwischen einem assoziierten Fahrzeug (1) und einer tragbaren Vorrichtung (50) bereitgestellt ist.

6. Fahrzeugsteuerungsvorrichtung (70) nach einem der vorstehenden Ansprüche, ferner umfassend:
eine Speichereinheit (24), die angepasst ist, um das Kennwort zu speichern; und
eine Vergleichseinheit, die angepasst ist, um ein eingegebenes Kennwort mit dem in der Speichereinheit (24) gespeicherten Kennwort zu vergleichen.

7. Fahrzeugsteuerungsvorrichtung (70) nach einem der vorstehenden Ansprüche, wobei die Kennworteingabeeinheit in der Nähe eines Lenkergriffabschnitts (5) eines assoziierten Fahrzeugs (1) bereitgestellt ist.

8. Fahrzeugsteuerungsvorrichtung (70) nach einem der vorstehenden Ansprüche, wobei die Kennworteingabeeinheit einen Warnblinkschalter (6) enthält, der angepasst ist, um eine Warnblinklampe (8) eines assoziierten Fahrzeugs (1) zum Blinken zu bringen.

9. Fahrzeugsteuerungsvorrichtung (70) nach Anspruch 8, wobei die Anzeigeeinheit (10) angepasst ist, um während der Eingabe eines Kennworts zu blinken, wenn der Warnblinkschalter (6) eingeschaltet ist, ohne die Warnblinklampe (8) zum Blinken zu bringen.

10. Fahrzeugsteuerungsvorrichtung (70) nach einem der vorstehenden Ansprüche, ferner einen zweiten Schalter (18) umfassend, der angepasst ist, um betätigt zu werden, um die Fahrzeugsteuerungsvorrichtung (70) in einen Zustand zu konfigurieren, der bereit zum Empfangen des Kennworts ist.

11. Fahrzeugsteuerungsvorrichtung (70) nach Anspruch 10, wobei der zweite Schalter (18) angepasst ist, um innerhalb einer im Voraus bestimmten Zeitperiode betätigt zu werden, um die Fahrzeugsteuerungsvorrichtung (70) in den vorbereiteten Zustand zu konfigurieren.

12. Fahrzeugsteuerungsvorrichtung (70) nach Anspruch 10 oder 11, wobei der zweite Schalter (18) angepasst ist, um eine Vielzahl von Malen betätigt zu werden, um die Fahrzeugsteuerungsvorrichtung (70) in den vorbereiteten Zustand zu konfigurieren.

13. Fahrzeugsteuerungsvorrichtung (70) nach Anspruch 10, 11 oder 12, wobei der zweite Schalter (18) einen Detektionsschalter umfasst, der angepasst ist, um geöffnet und geschlossene Zustände eines Öffnungs- und Schließungsabschnitts; der an dem Fahrzeug (1) bereitgestellt ist, zu detektieren.

14. Fahrzeugsteuerungsvorrichtung (70) nach Anspruch 13, wobei der Öffnungs- und Schließungsabschnitt einen Kofferraumabschnitt umfasst.

15. Fahrzeugsteuerungsvorrichtung (70) nach Anspruch 14, wobei der Kofferraumabschnitt einen Schlossabschnitt (21) zum Verschließen des Kofferraumabschnitts umfasst.

16. Fahrzeugsteuerungsvorrichtung (70) nach einem der Ansprüche 10 bis 15, ferner umfassend einen Eingabebetätigungsmodus-Startschalter (29), der an dem Fahrzeug (1) montiert ist und angepasst ist, um vor der Betätigung des zweiten Schalters (18) betätigt zu werden.

17. Fahrzeugsteuerungsvorrichtung (70) nach einem der Ansprüche 6 bis 16, wobei, wenn die Vergleichseinheit ein eingegebenes Kennwort mit einem in der Speichereinheit (24) gespeicherten Kennwort vergleicht, die Anzeigeeinheit (10) die Ergebnisse des Vergleichs anzeigt.

18. Fahrzeugsteuerungsvorrichtung (70) nach Anspruch 17, wobei die Anzeigeeinheit (10) Übereinstimmung und Nichtübereinstimmung als Ergebnisse des Vergleichs in verschiedenen Leuchtmustern anzeigt.

19. Fahrzeugsteuerungsvorrichtung (70) nach Anspruch 1, wobei die Zertifizierung der Verwendungserlaubnis eines Fahrzeugs durch ein Kommunikationssystem erfolgt, das Verwendung von einer tragbaren Gerätschaft (50) macht, wobei:
die Anzeigeeinheit (10) angepasst ist, um bei einem Notfallanlass zu blinken, wenn ein Kennwort zur Zertifizierung der Verwendungserlaubnis des Fahrzeugs (1) ohne die Verwendung der tragbaren Gerätschaft (50) eingegeben wird, und
die Kennworteingabeeinheit angepasst ist, um die Eingabe des Kennworts gemäß Frequenzen, mit denen die Anzeigeeinheit (10) blinkt, zu empfangen.

20. Fahrzeug (1), das die Fahrzeugsteuerungsvorrichtung (70) nach einem der Ansprüche 1 bis 19 umfasst.

## Revendications

1. Dispositif de contrôle de véhicule (70) adapté pour permettre l'utilisation d'un véhicule associé (1) en entrant un mot de passe, le dispositif de contrôle de véhicule (70) étant **caractérisé en ce qu'**il comprend :
une unité d'affichage (10) adaptée pour clignoter lorsqu'un mot de passe doit être entré, le nombre de clignotements de l'unité d'affichage (10) étant adapté pour correspondre à un nombre de mot de passe ; et
une unité d'entrée de mot de passe adaptée pour contrôler le nombre de clignotements de l'unité d'affichage (10).

2. Dispositif de contrôle de véhicule (70) selon la revendication 1, dans lequel l'unité d'entrée de mot de passe comprend un premier interrupteur (6) adapté pour être configuré entre les configurations marche (ON) et arrêt (OFF) pour contrôler le nombre de clignotements de l'unité d'affichage (10) de sorte qu'il corresponde à un nombre de mot de passe souhaité.

3. Dispositif de contrôle de véhicule (70) selon la revendication 2, dans lequel le premier interrupteur (6) est adapté pour être actionné en lui appliquant une force opérationnelle, et pour être maintenu dans une configuration marche (ON) ou arrêt (OFF) respective lorsque la force opérationnelle est supprimée.

4. Dispositif de contrôle de véhicule (70) selon la revendication 1, 2 ou 3, comprenant en outre une unité de contrôle de clignotement (9) adaptée pour contrôler l'unité d'affichage (10) de sorte qu'elle clignote à une fréquence prédéterminée.

5. Dispositif de contrôle de véhicule (70) selon l'une quelconque des revendications précédentes, dans lequel l'unité d'affichage (10) est prévue dans une unité d'affichage système pour être utilisée pour afficher un état d'un système de communication entre un véhicule associé (1) et un dispositif portable (50).

6. Dispositif de contrôle de véhicule (70) selon l'une quelconque des revendications précédentes, comprenant en outre :
une unité de stockage (24) adaptée pour stocker le mot de passe ; et
une unité de collationnement adaptée pour collationner un mot de passe entré avec le mot de passe stocké dans l'unité de stockage (24).

7. Dispositif de contrôle de véhicule (70) selon l'une quelconque des revendications précédentes, dans lequel l'unité d'entrée de mot de passe se trouve au voisinage d'une partie de préhension de poignée (5) d'un véhicule associé (1).

8. Dispositif de contrôle de véhicule (70) selon l'une quelconque des revendications précédentes, dans lequel l'unité d'entrée de mot de passe comprend un interrupteur de détresse (6) adapté pour faire clignoter les feux de détresse (8) d'un véhicule associé (1).

9. Dispositif de contrôle de véhicule (70) selon la revendication 8, dans lequel l'unité d'affichage (10) est adaptée pour clignoter pendant l'entrée d'un mot de passe lorsque l'interrupteur de détresse (6) est sur marche, sans faire clignoter les feux de détresse (8).

10. Dispositif de contrôle de véhicule (70) selon l'une quelconque des revendications précédentes, comprenant en outre un second interrupteur (18) adapté pour être actionné pour configurer le dispositif de contrôle de véhicule (70) dans un état préparé à recevoir le mot de passe.

11. Dispositif de contrôle de véhicule (70) selon la revendication 10, dans lequel le second interrupteur (18) est adapté pour être actionné une pluralité de fois pour configurer le dispositif de contrôle de véhicule (70) dans l'état préparé.

12. Dispositif de contrôle de véhicule (70) selon la revendication 10 ou 11, dans lequel le second interrupteur (18) est adapté pour être actionné dans une période de temps prédéterminée pour configurer le dispositif de contrôle de véhicule (70) dans l'état préparé.

13. Dispositif de contrôle de véhicule (70) selon la revendication 10, 11 ou 12, dans lequel le second interrupteur (18) comprend un interrupteur de détection adapté pour détecter les états ouvert et fermé d'une partie d'ouverture et de fermeture prévue sur le véhicule (1).

14. Dispositif de contrôle de véhicule (70) selon la revendication 13, dans lequel la partie d'ouverture et de fermeture comprend une partie de coffre.

15. Dispositif de contrôle de véhicule (70) selon la revendication 14, dans lequel la partie de coffre comprend une partie de blocage (21) pour bloquer la partie de coffre.

16. Dispositif de contrôle de véhicule (70) selon l'une quelconque des revendications 10 à 15, comprenant en outre un interrupteur de démarrage de mode de fonctionnement d'entrée (29) monté sur le véhicule (1) et adapté pour être activé avant actionnement du second interrupteur (18).

17. Dispositif de contrôle de véhicule (70) selon l'une quelconque des revendications 6 à 16, dans lequel lorsque l'unité de collationnement collationne un mot de passe entré avec un mot de passe stocké dans l'unité de stockage (24), l'unité d'affichage (10) affiche les résultats du collationnement.

18. Dispositif de contrôle de véhicule (70) selon la revendication 17, dans lequel l'unité d'affichage (10) affiche, dans différents motifs d'éclairage, l'approbation et la désapprobation suite au collationnement.

19. Dispositif de contrôle de véhicule (70) selon la revendication 1, dans lequel la certification de permis d'utilisation d'un véhicule est établie par un système de communication utilisant un équipement portable (50), dans lequel :
l'unité d'affichage (10) est adaptée pour clignoter en cas d'urgence lorsqu'un mot de passe de certification de permis d'utilisation du véhicule (1) est entré sans l'utilisation de l'équipement portable (50), et
l'unité d'entrée de mot de passe est adaptée pour recevoir l'entrée du mot de passe selon les fréquences auxquelles l'unité d'affichage (10) clignote.

20. Véhicule (1) comprenant le dispositif de contrôle de véhicule (70) selon l'une quelconque des revendications 1 à 19.
